# EUROPÄISCHE PATENTSCHRIFT

(11) **EP 0 999 564 B1**
(45) Veröffentlichungstag und Bekanntmachung des Hinweises auf die Patenterteilung: **02.07.2003**
(21) Anmeldenummer: 99120578.2
(22) Anmeldetag: 16.10.1999
(51) Int. Cl.: H01F 38/08, H01F 3/14, H01F 38/02

(54) **Ausgangsdrossel für eine Gleichstrom-Schweisseinrichtung und Verfahren zum Einstellen der Induktivität im Ausgangsstromkreis einer Gleichstrom-Schweisseinrichtung**
Output choke for a direct current welding device and method for adjusting the inductivity in the electrical output circuit of a direct current welding device
Inductance de sortie pour un dispositif de soudage à courant continu et procédé de réglage de l'inductivité dans le circuit électrique de sortie d'un dispositif de soudage à courant continu

(30) Priorität: 02.11.1998 US 184149
(43) Veröffentlichungstag der Anmeldung: 10.05.2000
(73) Patentinhaber: LINCOLN GLOBAL, INC., Cleveland, Ohio 44117-1199 (US)
(72) Erfinder: Clark, Keith Leon, Concord, Ohio 44040 (US); Housour, Brian Keith, Chardon, Ohio 44024 (US)
(74) Vertreter: Hennicke, Ernst Rüdiger, Dipl.-Ing.

(56) Entgegenhaltungen:
- EP-A- 0 039 485
- EP-A- 0 729 040
- DE-A- 2 848 119
- GB-A- 229 484
- US-A- 1 353 711
- US-A- 4 398 080
- US-A- 5 816 894

## Beschreibung

Die Erfindung betrifft eine Ausgangsdrossel für eine Gleichstrom-Lichtbogenschweißeinrichtung mit einem Spulenkern mit hoher Permeabilität, der mindestens einen zwischen ersten und zweiten Polstücken ausgebildeten Spalt hat, der von ersten und zweiten Stirnflächen der Polstücke begrenzt wird.

Bei Gleichstrom-Lichtbogenschweißeinrichtungen weist deren Ausgangsschaltkreis üblicherweise einen Kondensator auf, der parallel zu der Elektrode und dem Werkstück geschaltet ist. Der Ausgangsschaltkreis hat eine vergleichsweise kleine Spule oder Induktivität, um den Kondensator aufzuladen, wenn von einem Gleichrichter oder einer anderen geeigneten Stromversorgung ein Gleichstrom zur Verfügung gestellt wird. Diese Induktivität vermindert oder verhindert ein Pulsieren des Schweißstroms. Mit dem Lichtbogenspalt der Schweißanordnung ist eine große Drossel in Serie geschaltet, die in der Lage ist, starke Ströme von mehr als etwa 50 Ampère zu bewältigen und die dazu dient, den Stromfluß zu steuern bzw. zu regeln, um den Lichtbogen zu stabilisieren. Wenn sich die Vorschubgeschwindigkeit der Elektrode in Richtung auf das Werkstück und die Länge des Lichtbogens verändern, führt dies zu einer Veränderung des Schweißstroms. In der Vergangenheit hatte die in Serie mit dem Lichtbogen geschaltete große Ausgangsdrossel einen unveränderlichen Luftspalt im Kern, um die Induktivität auf einen festen Wert einzustellen, wenn sich der Strom verändert. Wenn nun die Drossel großen Schweißströmen ausgesetzt wird, führt dies zu einer Sättigung des Kerns und einer drastischen Verringerung der Induktivität. Aus diesem Grund hat man die Spaltweite des Luftspalts im Kern vergrößert, um eine gleichbleibende Induktivität über den Strom- Betriebsbereich der Schweißeinrichtung zu erhalten. Die Drossel wurde für einen bestimmten Betriebsstrombereich ausgelegt. Dieser Bereich kann jedoch für verschiedene Schweißvorgänge variieren. Die Spaltweite des Luftspalts in der Drossel wurde daher auf die meisten der üblicherweise stattfindenden Schweißoperationen hin ausgelegt.

Bei einer üblichen Drossel sorgt ein schmaler Luftspalt für eine hohe Induktivität, führt jedoch zu einer Sättigung bereits bei vergleichsweise niedrigen Strömen. Um die Stromkapazität der Drossel zu vergrößern, wurde der Luftspalt erweitert, was bei vorgegebener Größe der Drossel zu einer Verringerung des Betrags der Induktivität führt. Aus diesen Gründen wurden die Drosseln vergleichsweise groß ausgebildet mit großen Drahtquerschnitten, die den Schweißstrom handhaben können und mit einem Kern mit großem Querschnitt, um eine Sättigung zu verhindern. Der Spalt bei den bekannten Drosseln hat eine große Spaltweite, um einen weiten Schweißstrombereich zu ermöglichen. Derartige Drosseln sind teuer und führen zu einem hohen Gewicht der Schweißeinrichtung. Darüber hinaus erzeugen diese Drosseln eine gleichbleibende Induktivität bis hin zum Sättigungspunkt oder Knick ihrer Kennlinie, obwohl ein bestmögliches Lichtbogenschweißen mit einer Induktivität erfolgt, die sich umgekehrt proportional zur Höhe des Schweißstromes verhält.

Um diese Nachteile zu verringern, ist vorgeschlagen worden, daß der Luftspalt zwei oder drei verschiedene Spaltweiten haben könnte. Dieser Vorschlag führt zu einer hohen Induktivität bis zu einer Sättigung des Kerns im Bereich des Spalts mit der geringsten Spaltweite. Durch Verwendung von zwei, möglicherweise drei stufenförmig voneinander abgesetzten Luftspalte konnte die Größe der Drossel verringert und der von der Drossel gesteuerte bzw. geregelte Strombereich vergrößert werden. Darüber hinaus ergab sich ein inverses Verhältnis von Strom und Induktivität zueinander. Der Vorschlag, einen stufenförmig abgesetzten Luftspalt im Kern der Ausgangsdrossel vorzusehen, erlaubte es also, die Drossel kleiner auszuführen. Als nachteilig hat sich allerdings erwiesen, daß bei dieser Ausführungsform ein oder mehrere Wendepunkte oder Unstetigkeitsstellen (inflection point) vorhanden sind. Wenn die Vorschubgeschwindigkeit der Elektrode oder die Lichtbogenlänge zu einem Wert verändert werden, bei dem das Schweißen im Bereich des oder der Wendepunkte erfolgt, kommt es zum Schwingen der Gleichstromschweißeinrichtung um die Sättigungsgrenze oder den Wendepunkt, was einen instabilen Betrieb zur Folge hat. Zur Behebung der vorstehenden Nachteile eine übliche Siebdrossel, also eine Drossel mit veränderlicher Induktivität einzusetzen, hat sich als nicht praktikabel erwiesen, da der Schweißstrom sich zu stark verändert, um im Bereich der Sättigungsgrenze zu arbeiten. Darüber hinaus sind Siebdrosseln üblicherweise nur für Anwendungsbereiche mit geringen Strömen vorgesehen.

Für Gleichstrom-Lichtbogenschweißeinrichtungen ist derzeit die Verwendung einer Festwert-Ausgangsdrossel üblich. Derartige Drosseln sind groß und ihr Betriebspunkt liegt in dem linearen Bereich der Induktivität, was bemerkenswerte Verringerungen in der Ausgangsinduktanz des Schweißgerätes verhindert. Die heute üblicherweise verwendeten Drosseln sind teuer und schwer. Durch Abstufung des Luftspaltes könnte die Größe der Drossel verringert und der Betriebsstrombereich vergrößert werden; jedoch führt der Wendepunkt (inflection point) bei Sättigung im Bereich des Spaltes einer Spaltweite dazu, daß die Schweißeinrichtung weniger robust ist und bei bestimmten Lichtbogenlängen und Vorschubgeschwindigkeiten der Elektrode zu Schwingungen neigt. Demgemäß hat sich die vorgeschlagene Modifizierung der Drossel wirtschaftlich nicht durchsetzen können.

Aus der US-A-5,816,894 ist eine Drossel mit einem Spulenkern bekannt, der einen oder mehrere Spalte aufweist, wobei dieser Druckschrift im wesentlichen ein Verfahren zum Herstellen einer Drossel zu entnehmen ist, das sich durch hohe Produktivität und geringe Kosten auszeichnet. Die bekannten Drosselkerne weisen einen abrupten Anstieg bzw. eine plötzliche Verminderung der Größe des Spalts zwischen den äußeren Kernkanten auf, da bei den verschiedenen Ausführungsformen zumindest an einem der beiden Polschuhe ein oder zwei Schlitze vorgesehen sind, die zu Unstetigkeitsstellen im Verlauf der Sättigungskurve der Drossel führen.

Aus der US-A-1,353,711 ist ein elektrisches Lichtbogenschweißgerät bekannt, mit dem die Einhaltung der richtigen Blindspannung für einen effizienten Betrieb bei vorgegebenem Strom sichergestellt werden kann. Bei der bekannten Einrichtung kommt es zu einer fortschreitenden Sättigung, wenn sich der Strom durch die Drosselspule erhöht.

Aus der EP 0039 485 A1 ist ein Zeilentransformator für einen Fernsehempfänger bekannt, bei dem die Kernteile eines Kerns zwischen sich einen Luftspalt bilden, der in einer Ausführungsform im Schnitt etwa bogenförmig ausgestaltet ist. Hierdurch wird der Innenwiderstand der Hochspannungsquelle verringert.

Aufgabe der Erfindung ist es, eine Ausgangsdrossel für eine Gleichstrom-Schweißeinrichtung zu schaffen, die die Probleme des hohen Gewichts, der Kosten und von Inkonsistenzen beim Schweißen vermeidet, wie sie bei großen Drosseln mit einem gleichbleibend weiten Luftspalt oder kleineren Drosseln mit stufenförmig abgesetzten Luftspalten auftreten.

Diese Aufgabe wird mit der Erfindung durch eine Ausgangsdrossel mit den Merkmalen des unabhängigen Anspruchs 1 gelöst.

Erfindungsgemäß hat also der Spalt in seinem Querschnitt längs des Kerns eine sich graduell oder kontinuierlich verändernde Spaltweite. Die Spaltweite des Luftspaltes steigt ausgehend von den äußeren Kantenbereichen des Kerns gleichmäßig an. Der Luftspalt im Querschnitt ist im wesentlichen rautenförmig, d.h., die Spaltweite steigt von den zwei außenliegenden Kantenbereichen, an denen die Spaltweite ihren Minimalwert erreicht, zu ihrem im Inneren des Kerns liegenden Maximalbereich hin an. Diese rautenförmige Ausgestaltung des Spaltes im Kern einer Ausgangsdrossel für eine Gleichstrom-Schweißeinrichtung erzeugt im Ausgangsschaltkreis eine Induktivität, die sich über den Strombereich allmählich verändert, und zwar in einem reziproken Verhältnis zum Schweißstrom. Wenn der Schweißstrom ansteigt, verringert sich die Induktivität kontinuierlich ohne Unstetigkeitsstellen oder Stufen im Verlauf. Demgemäß liegt der Schweißstrom niemals am Sättigungspunkt der Ausgangsdrossel und die Schweißeinrichtung wird auch nicht in der Nähe des Knickpunktes der Sättigungslinie betrieben. Es kommt also nicht zu Leistungsschwankungen beim Schweißen. Mit der Erfindung ist es möglich, eine sehr starke Schweißeinrichtung zu schaffen, mit der Veränderungen einschließlich einer Veränderung der Spannung um 5 bis 10 Volt bei Längenveränderungen im Lichtbogen gehandhabt werden können, ohne daß es zu Instabilität des Lichtbogens kommt. Die Drossel ermöglicht also eine Stromsteuerung bzw. -regelung über einen großen Schweißstrombereich, ohne daß es zum Ausschwingen kommt und ohne daß es erforderlich wäre, eine besonders große Ausgangsdrossel vorzusehen.

In vorteilhafter Ausgestaltung der Erfindung hat die Ausgangsdrossel - wie bereits erwähnt - einen Kern aus einem Werkstoff mit hoher Permeabilität, der einen Spalt aufweist, der von ersten und zweiten einander gegenüberliegenden Grenzflächen eines ersten und zweiten Polstückes begrenzt wird. Jede der Stirnoder Grenzflächen hat zwei im Abstand voneinander liegende Kantenbereiche und einen dazwischen liegenden Zwischenbereich, wobei die Flächen von dem Zwischenbereich in Richtung auf die jeweiligen Kantenbereiche der Flächen konvergieren und so die spezifische Querschnittsform des Luftspaltes ausbilden. Diese Querschnittsform ist im wesentlichen rautenförmig, was zu einer allmählichen oder kontinuierlichen Veränderung der Induktivität in Abhängigkeit von Veränderungen beim Schweißstrom führt. Bei der bevorzugten, rautenförmigen Ausgestaltung des Luftspaltes befindet sich der Zwischenbereich im Zentrum der Polstücke, also im gleichen Abstand von den beiden außenliegenden Kantenbereichen. Es ist aber auch möglich, daß der Zwischenbereich und damit der Maximalwert der Spaltweite näher an dem einen als am anderen Kantenbereich der sich gegenüberliegenden Stirnflächen liegt. Hierbei ergibt sich dann eine ungleichseitige Rautenform.

Mit der Erfindung wird eine Drossel erhalten, deren Induktivität sich mit dem Ausgangsstrom der Schweißeinrichtung kontinuierlich verändert, ohne daß es zu einer Sättigung zwischen benachbarten Bereichen kommt, die zu Unstetigkeiten oder Wendepunkten führen würde, was Regelschwankungen oder Schwingungen der Schweißeinrichtung bei bestimmten Vorschubgeschwindigkeiten des Drahtes und Lichtbogenlänge zur Folge hätte.

Mit der Erfindung wird eine Gleichstrom-Schweißeinrichtung geschaffen, die über einen vorgegebenen Strombereich zum Schweißen betrieben werden kann, indem ein Schweißstrom über den Spalt zwischen einer Elektrode und einem Werkstück geleitet wird. Nach der Erfindung wird eine Spule mit im wesentlichen konstanter Induktivität über den Strombereich zum Aufladen eines Kondensators vorgesehen, der parallel zum Schweißspalt oder zum Lichtbogen geschaltet ist. Darüber hinaus wird eine Drossel mit einer Induktivität vorgesehen, die sich über den Strombereich allmählich bzw. kontinuierlich verändert und die Drossel wird in Serie mit dem Spalt bzw. dem Lichtbogen, und zwar zwischen den Spalt und den Kondensator eingeschaltet. Bei dieser Schaltungsanordnung verändert sich die Induktivität im wesentlichen entlang einer geraden Linie umgekehrt proportional zum Schweißstrom, so daß bei Anstieg des Stromes die Induktivität gleichmäßig entlang einer im wesentlichen geraden Linie abnimmt. Dies ist das bestmögliche Verhältnis beim Lichtbogenschweißen. Der Begriff "im wesentlichen geradlinig" im vorstehenden Sinne soll bedeuten, daß die Kurve keine Wendepunkte oder Unstetigkeitsstellen aufweist, wie sie bei Luftspalten auftreten, die stufenförmig abgesetzt sind.

Die vorliegende Erfindung ist besonders für solche Schweißeinrichtungen geeignet, die eine vergleichsweise große Ausgangsdrossel benötigen. Dieser Anwendungsbereich unterscheidet sich von Energieversorgungen für geringe Leistungen wie z.B. für Leuchten, Audio- oder Videoeinrichtungen. Bei solchen kleinen Energieversorgungseinrichtungen treten nicht die starken Ströme oder ein so großer Schwankungsbereich des Stroms auf, wie es für das Lichtbogenschweißen erforderlich ist. Bei Lichtbogen-Schweißeinrichtungen treten Ströme auf, die größer sind als 50 Ampère. Tatsächlich kann es sich bei der Drossel nach der vorliegenden Erfindung um eine solche handeln, bei der selbst Ströme von 100 bis 500 Ampère noch nicht zur Sättigung des Kerns führen. Die erfindungsgemäße Ausgangsdrossel kann vorzugsweise mindestens 100 Ampère handhaben, womit sie sich deutlich von anderen in Energieversorgungseinrichtungen eingesetzten Induktoren unterscheidet.

Die Erfindung liegt auf dem Bereich des Lichtbogenschweißens, wo ein bestmöglicher Betrieb vorzugsweise bei einem reziproken Verhältnis zwischen Induktivität und Schweißstrom erreicht wird. Kleine Induktoren werden üblicherweise dort verwendet, wo die optimale Betriebskennlinie zwischen Strom und Induktivität linear verläuft. Um einen Betrieb zu ermöglichen, in dem sich Induktivität und Strom invers zueinander verhalten, werden solche kleinen Spulen am Knickpunkt der Sättigungskurve betrieben. Hierdurch wird bei einem kleinen Strom eine höchstmögliche Induktivität erreicht, die auf einen geringeren Wert absinkt, wenn der Strom ansteigt. Derartige Spulen werden auch als "Schwingdrosseln" bezeichnet; sie arbeiten allerdings nur in einem vergleichsweise schmalen Strombereich am Knickpunkt der magnetischen Sättigungskurve und sind normalerweise so ausgelegt, daß sie nur kleine Ströme von weniger als 10 Ampère handhaben können. Derartige kleine Schwingdrosseln könnten nicht mit Erfolg als Ausgangsdrossel für eine Gleichstrom-Schweißeinrichtung verwendet werden, da die dort geforderte Strom-Bandbreite vergleichsweise groß ist und auch die Schweißströme sehr hohe Werte annehmen können, die über 50 Ampère liegen.

Das vorrangige Ziel der Erfindung ist es, eine Ausgangsdrossel für eine Gleichstrom-Schweißeinrichtung zu schaffen, deren Induktivität über einen weiten Strombereich kontinuierlich variabel ist und die Ströme von mehr als 50 Ampère und vorzugsweise Ströme in einem Bereich von 100 bis 500 Ampère handhaben kann. Dabei soll die genannte Ausgangsdrossel für ein Gleichstrom-Schweißgerät möglichst keine Wendepunkte (inflection points) bzw. Unstetigkeitsstellen im Induktivitätsverlauf haben und die Energieversorgung nicht zum Schwingen bringen, wenn die Vorschubgeschwindigkeit des Drahtes oder die Lichtbogenlänge verändert wird.

Mit der Erfindung wird eine Ausgangsspule für eine Gleichstrom-Schweißeinrichtung geschaffen, die in ihrem Betriebsverhalten keine nicht-linearen Bereiche aufweist und die über einen großen Bereich verschiedener Schweißstromstärken betrieben werden kann, ohne daß es zur Sättigung kommt. Bei der erfindungsgemäßen Ausgangsdrossel für ein Gleichstrom-Schweißgerät besteht eine im wesentlichen linienförmige Abhängigkeit zwischen Strom und Induktivität über eine weite Bandbreite des Schweißstroms. Weiterhin ist es mit der erfindungsgemäßen Ausgangsdrossel für ein Gleichstrom-Schweißgerät möglich, eine hohe Induktivität bei niedriger Drahtzufuhrgeschwindigkeit und eine geringe Induktivität bei hoher Drahtzufuhrgeschwindigkeit zu erreichen, ohne daß es zu einem Übergang von einer zu einer anderen Sättigungskurve für die Drossel kommt. In besonders vorteilhafter Ausgestaltung der Erfindung wird eine Ausgangsdrossel für eine Gleichstrom-Schweißeinrichtung vorgesehen, die einen Luftspalt mit einer Rautenform hat, um das Strom-Induktivitätsverhalten zu steuern bzw. zu regeln.

Weitere Merkmale und Vorteile der Erfindung ergeben sich aus der nachfolgenden Beschreibung und den Zeichnungen, worin bevorzugte Ausführungsformen der Erfindung anhand von Beispielen näher erläutert sind. Es zeigt:
- Fig. 1: ein schematisches Schaltbild einer Gleichstromschweißeinrichtung mit einem Ausgangsschaltkreis, der von der vorliegenden Erfindung Gebrauch macht;
- Fig. 2: eine übliche Ausgangsdrossel für GleichstromSchweißeinrichtungen nach dem Stand der Technik in einer vereinfachten, perspektivischen Darstellung;
- Fig. 3: ein Strom-Induktivitäts-Diagramm mit Darstellung der Sättigungskurven bei verschieden großen Luftspalten bei der bekannten Drossel nach Fig. 2;
- Fig. 4: eine perspektivische Darstellung einer Ausgangsdrossel für Gleichstrom-Schweißeinrichtungen wie sie zur Verringerung der Nachteile der Drossel nach dem Stand der Technik gem. Fig. 2 vorgeschlagen wurde;
- Fig. 5: ein Strom-Induktivitäts-Diagramm mit Darstellung der Sättigungskurve für die schematisch in Fig. 4 dargestellte Drossel;
- Fig. 6: eine perspektivische Darstellung einer ersten bevorzugten Ausführungsform einer Ausgangsdrossel für Gleichstrom-Schweißeinrichtungen nach der Erfindung;
- Fig. 7: ein Strom-Induktivitäts-Diagramm für die erste bevorzugte Ausführungsform der Erfindung nach Fig. 6;
- Fig. 8: eine Seitenansicht des Kerns der ersten Ausführungsform der erfindungsgemäßen Drossel im Bereich des Luftspaltes;
- Fig. 9: ein Strom-Induktivitäts-Diagramm mit Darstellung der Betriebskennlinie für die Ausführungsform der erfindungsgemäßen Drossel nach Fig.8;
- Fig. 10: eine Seitenansicht des Kerns einer zweiten Ausführungsform der erfindungsgemäßen Drossel im Bereich des Luftspaltes, dessen Form gegenüber der Ausführungsform nach Fig. 8 modifiziert ist; und
- Fig. 11: eine Seitenansicht des Kerns einer dritten Ausführungsform der erfindungsgemäßen Drossel, worin die bevorzugte Rautenform des Luftspaltes von zwei Kernstücken begrenzt ist, die einander berühren und miteinander verbunden sind.

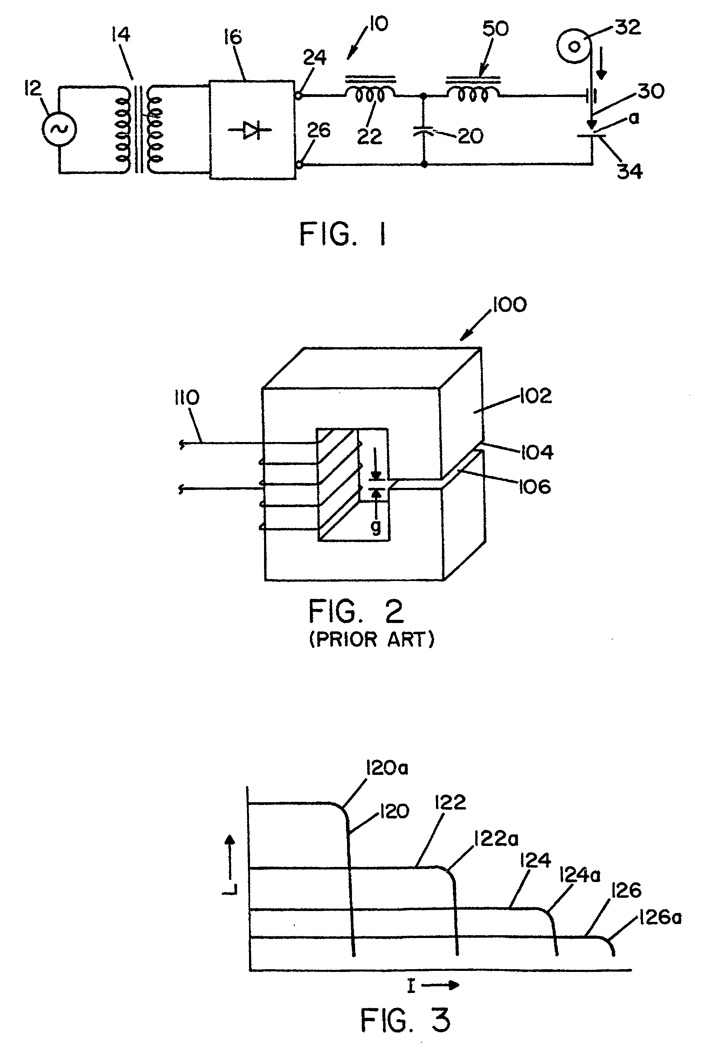

In den Zeichnungen, die lediglich zur Erläuterung der bevorzugten Ausführungsformen der Erfindung und nicht zu deren Beschränkung dienen sollen, zeigt Fig. 1 eine Gleichstrom-Lichtbogenschweißeinrichtung 10, die mit einem Schweißstrom von wenigstens 50 Ampère und bis zu 200 bis 1000 Ampère arbeiten kann. Die Schweißeinrichtung hat eine Stromversorgung 12, die vereinfacht als Einphasen-Wechselstrom dargestellt ist, der über einen Transformator 14 einem Gleichrichter 16 zugeführt wird. Selbstverständlich ist es auch möglich, den Gleichrichter mit einem Dreiphasenstrom zu beaufschlagen, um eine Gleichspannung zu erzeugen.

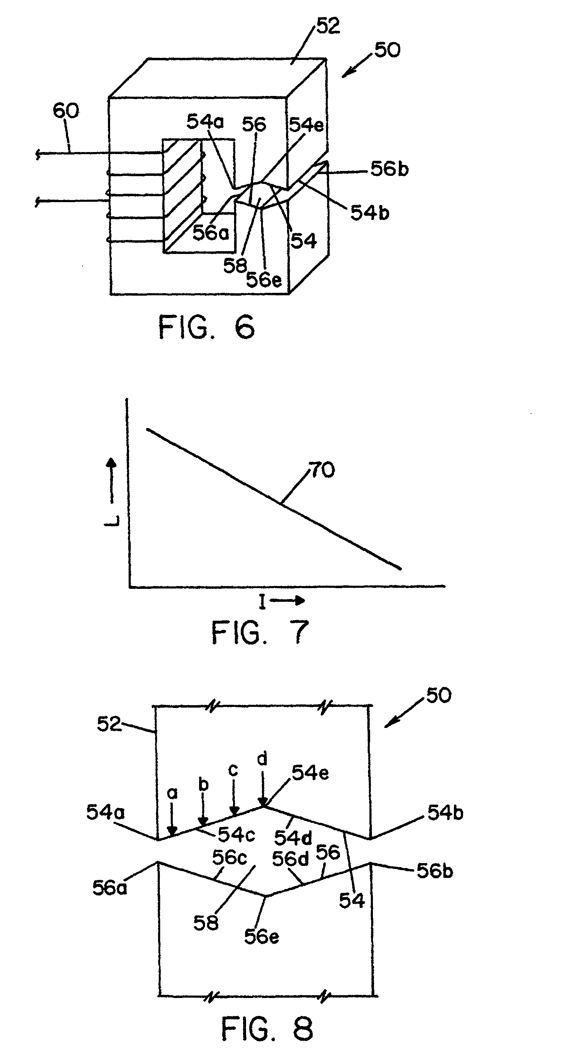

In bekannter Weise weist die Schweißgeräteschaltung 10 einen Kondensator 20 mit einer Kapazität von etwa 20.000 bis 150.000 Mikrofarad (20 K-150 K micro farads) auf, der von einer Spule 22 aufgeladen wird, die eine Größe von etwa 20 mH hat. Der Gleichrichter 16 lädt also den Kondensator 20 über die Spule 22 auf, wobei die Spule auch durch die Induktivität des Transformators ersetzt sein kann. Die an Klemmen 24, 26 am Gleichrichter 16 anliegende Ausgangsspannung ist die am Kondensator 20 angelegte Spannung, mit der eine an einen Lichtbogenspalt a anliegende Spannung zwischen einer Elektrode 30 von einer Drahtzuführeinrichtung 32 und einem Werkstück 34 aufrechterhalten wird. Um einen gleichmäßigen Stromfluß über den Lichtbogen a zu erhalten, ist im Ausgangsschaltkreis zwischen dem Kondensator 20 und dem Spalt oder Lichtbogen a eine vergleichsweise große Ausgangsdrossel 50 angeordnet. Aufbau und Betrieb der den Strom steuernden bzw. regelnden Ausgangsdrossel 50, die am besten in Fig. 6 erkennbar ist, ist Gegenstand der vorliegenden Erfindung.

In der Vergangenheit handelte es sich bei Ausgangsdrosseln um vergleichsweise große und schwere Bauteile, wie sie schematisch in Fig. 2 dargestellt sind. Eine solche Drossel 100 weist einen auf eine hohe Betriebssicherheit ausgelegten Kern 102 mit einem Luftspalt g auf, der von zwei einander zugewandten Stirnflächen 104, 106 begrenzt ist. Die hohen, zum Einsatz kommenden Ströme machen es erforderlich, für die Wicklung 110 einen Draht mit großem Querschnitt vorzusehen. Um eine hohe Induktivität zu erreichen, ist die Anzahl der Windungen der Wicklung groß. Um eine Sättigung zu verhindern, hat der Kern 102 der in Fig. 2 dargestellten, bekannten Drossel einen großen Querschnitt. Die Drossel 100 ist daher groß, schwer und teuer. Indem die Spaltweite des Spaltes g zwischen den Flächen 104 und 106 verändert wird, erreicht man eine Sättigung des Kerns 102 bei unterschiedlich großen Schweißströmen in der Wicklung 110 entsprechend den Sättigungskurven, wie sie in Fig. 3 dargestellt sind. Bei einem vergleichsweise engen Luftspalt einer vorgegebenen Drossel erreicht man eine hohe Induktivität, wobei es jedoch bereits bei vergleichsweise geringen Schweißströmen zu einer Sättigung des Kerns kommt. Diesem Sachverhalt entspricht die Sättigungskurve 120. Vergrößert man die Spaltweite des Spaltes g, führt dies zu einer Verringerung des Induktivität, während der Sättigungsstrom größer wird. Diese Auswirkungen von vergrößerten Spaltweiten sind durch die Sättigungskurven 122, 124 und 126 angedeutet. Jede der Sättigungskurven hat einen Sättigungspunkt oder Knickpunkt der Sättigungskurve 120a, 122a, 124a und 126a. Betreibt man eine Schweißeinrichtung 10 mit einer Drossel, deren Spaltweite über den gesamten Kernquerschnitt gleich groß und unveränderlich ist, wie dies in Fig. 2 dargestellt ist, muß eine Sättigungskurve gewählt werden, die den gewünschten Schweißströmen gerecht wird. Um sowohl eine hohe Induktivität und einen großen Strombereich zu erreichen, muß die Anzahl der Windungen 110 vergrößert werden und auch der Kern muß möglichst großzügig bemessen sein. Dieses Erfordernis erhöht die Größe und das Gewicht der Drossel erheblich. Möchte man das Gewicht und die Größe der bekannten Drossel verringern, hat die erreichhbare Sättigungskurve einen vergleichsweise niedrigen Sättigungsstrom, was zu einem unregelmäßigen oder sprunghaften Betrieb des Schweißgerätes führt.

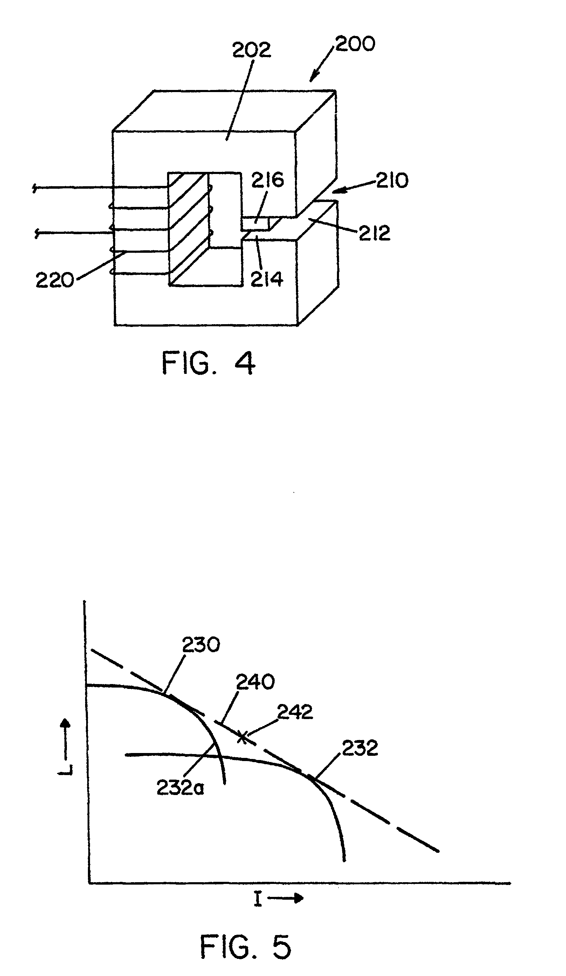

Um die Probleme zu verringern, die mit der vorstehend beschriebenen Drossel nach Fig. 2 verbunden sind, die einen über den Querschnitt des Kerns gleichbleibend dicken Spalt für die Stromregelung im Ausgangsschaltkreis einer Gleichstrom-Schweißeinrichtung hat, ist vorgeschlagen worden, eine Drossel zu verwenden, wie sie schematisch in Fig. 4 dargestellt ist. Diese Drossel 200 hat einen Kern 202 aus einem Material mit hoher Permeabilität, in dem ein Luftspalt 210 angeordnet ist. Der Luftspalt bei dieser Drossel ist stufenförmig ausgebildet mit einem Bereich 212 großer Spaltweite und einem Bereich 214 kleiner Spaltweite, der durch ein zusätzliches, kleines Polstück 216 erhalten wird, das im Spalt an einem der beiden Kernteile des Kerns angeordnet ist. Wenn durch die Wicklung 220 ein Strom fließt, der größer als 100 bis 500 Ampère ist, folgt die Induktivität einer zweiteiligen Sättigungskurve, wie sie in Fig. 5 dargestellt ist. Diese nicht-lineare Kurve hat einen ersten Abschnitt 230, der das Strom-Induktivitätsverhalten der Drossel kennzeichnet, bis es zu einer Sättigung im Bereich des schmalen Spaltes 214 kommt. Der zweite Bereich 232 der Sättigungskurve beschreibt das Betriebsverhalten der Drossel bis zu deren Sättigung auch im Bereich des größeren Spaltes 212. Diese beiden Abschnitte erzeugen ein wirksames Strom-Induktivitäts-Verhältnis, wie es von der gestrichelten Linie 240 angedeutet wird. Das umgekehrt proportionale Verhältnis zwischen Strom und Induktivität ist besonders vorteilhaft beim elektrischen Lichtbogenschweißen. Die zweiteilige Kurve gestattet sowohl einen Betrieb bei niedrigem als auch bei hohem Strom. Gleichwohl bewirkt der vergleichsweise steile Abfall im Bereich des Sättigungsknies 232a einen Wendepunkt(inflection point) 242, der bei einem Betrieb der Schweißeinrichtung entlang der Linie 240 zu Schwingungen führt, wenn die Drahtzufuhrgeschwindigkeit verändert wird oder es zu einer Veränderung der Lichtbogenlänge oder Lichtbogenspannung kommt. Im Bereich des Inflektionspunktes 242 treten also Regelschwankungen (hunting) auf, was die Wirksamkeit der vorgeschlagenen, stufenförmigen Spaltform gem. Fig. 4 verringert.

Bevorzugte Ausführungsformen der Drossel 50 nach Fig. 1 entsprechend der vorliegenden Erfindung sind in den Fig. 6 bis 8 dargestellt. Der Kern 50 besteht aus einem Werkstoff mit hoher Permeabilität und hat einen Querschnitt, der groß genug ist, um eine Sättigung auch bei einem Strom von mehr als 50 Ampère, vorzugsweise bei mehr als 100 bis 500 Ampère zu verhindern. Zwischen Kantenbereichen 54a, 54b und 56a, 56b erstrecken sich die einander zugewandten Stirnflächen 54, 56 der beiden Polstücke des Kerns 50. Die im Querabstand voneinander liegenden Kantenbereiche des einen Polstückes liegen gegenüber den Kantenbereichen des anderen Polstückes und bilden dort einen vergleichsweise schmalen Luftspalt, wenn sie einander nicht gar berühren und den Kern in diesem Bereich vollständig schließen. Im Innenbereich 58 begrenzen die Stirnflächen 54, 56 einen Spalt mit vergleichsweise großer Spaltweite. Der Luftspalt hat somit eine Rautenform, die sich zwischen den im Abstand voneinander angeordneten Flächen 54, 56 ausbildet und die von deren Teilflächen 54c, 54d der Stirnfläche 54 sowie 54c, 54d der Stirnfläche 56 begrenzt wird. Diese Flächenteile gehen ausgehend von einem Maximalwert der Spaltweite des Luftspaltes bei den Scheitelpunkten 54e und 56e des rautenförmigen Luftspaltes auseinander. Der Schweißstrom wird von einer Wicklung 60 um den Kern 52 geleitet, die so bemessen ist, daß sie den Schweißstrom leiten kann und deren Windungszahl für die gewünschte Induktivität ausgelegt ist. Infolge des rautenförmigen Luftspaltes gem. Fig. 4 wird bei gegebener Kerngröße und Windungszahl eine Strom-Induktivitäts-Kurve 70 erhalten, wie sie in Fig. 7 dargestellt ist. Der in Fig. 7 gezeigte Kurvenverlauf 70 repräsentiert ein bestmögliches Strom-Induktivitäts-Verhältnis für das elektrische Lichtbogenschweißen, wo der Strom von einer Stromstärke von 20 Ampère bis auf ein hohes Niveau von etwa 200 Ampère und häufig darüber hinaus bis 500 oder 1000 Ampère ansteigt. Wie in Fig. 8 angedeutet ist, neigt der schmale Luftspalt an den Kanten 54a, 56a und 54b, 56b zur Sättigung bei niedrigen Strömen. Bei einem Anstieg des Stroms auf einen hohen Wert versucht die Drossel einen ausgesprochen großen Luftspalt zu sättigen. Wie dies durch die Pfeile in Fig. 8 angedeutet ist, würde eine Sättigung des Kerns infolge des Flusses durch den rautenförmigen Luftspalt zur Sättigung des schmaleren Spaltes im Bereich a führen, aber nicht über die Punkte b, c oder gar d fortschreiten. Der Scheitelpunkt des rautenförmigen Luftspaltes bzw. die Spaltweite des Spaltes im Bereich des Scheitels ist so bemessen, daß eine Sättigung selbst bei dem höchstmöglich auftretenden Schweißstrom nicht stattfindet. Es ergibt sich somit ein geradliniges Verhältnis zwischen Strom und Induktivität, die sich in Abhängigkeit voneinander allmählich und kontinuierlich verändern, wenn der Spalt mit der erfindungsgemäß besonders vorteilhaften Querschnittsform einer Raute zur Anwendung kommt.

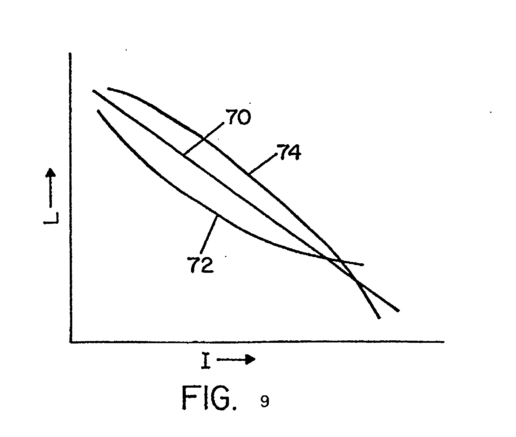

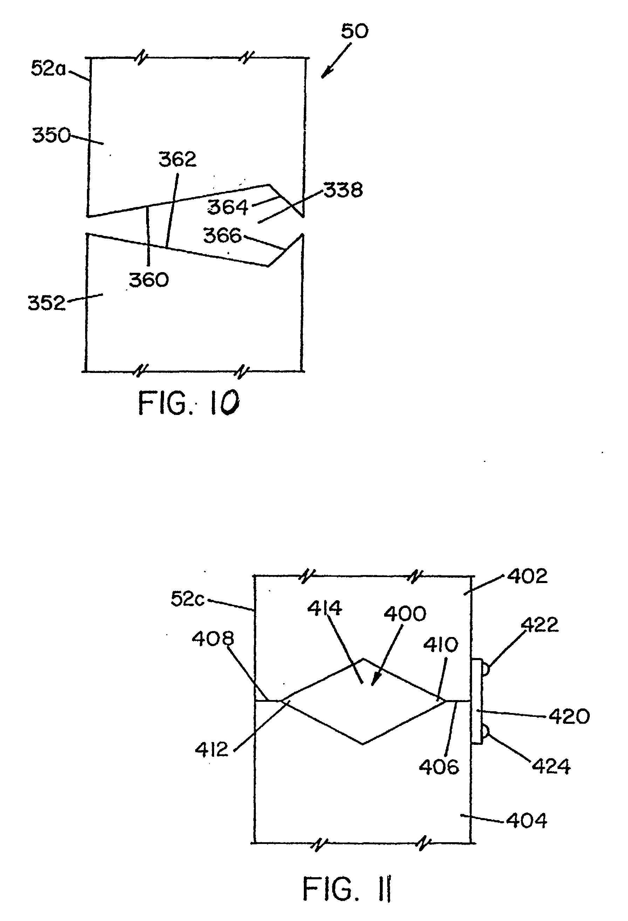

Gemäß der bevorzugten Ausführungsform der Erfindung konvergiert der Luftspalt allmählich und ist symmetrisch relativ zum Kern aufgebaut. Es ist jedoch auch möglich, den Luftspalt asymmetrisch auszugestalten, wie dies in Fig. 10 dargestellt ist. Der in Fig. 10 gezeigte Kern 52a einer Drossel 50 hat Polstücke 350, 352 mit einander zugewandten Stirnflächen, die in aufeinanderzu konvergierende Teilflächen 360, 362 und 364, 366 unterteilt sind. Diese Teilflächen begrenzen einen Bereich mit weitem Luftspalt 338, der ein Stück weit aus dem Zentrum des Kerns versetzt ist. Auch diese asymmetrische Ausgestaltung des Spaltes bringt bessere Ergebnisse als der stufenartig abgesetzte Spalt 210 nach Fig. 4; sie erreicht jedoch nicht ganz die in Fig. 9 dargestellten, wünschenswerten Ergebnisse, wie sie durch eine symmetrische Anordnung des Luftspaltes entsprechend der bevorzugten Ausführungsform nach Fig. 8 erreicht wird.

In der Praxis weist die Drossel 50 vorzugsweise einen Kern auf, wie er in Fig. 11 dargestellt ist. Zwischen zwei Polstücken 402, 404 ist ein rautenfömiger, symmetrischer Luftspalt 400 ausgebildet. Die Polstücke 402, 404 berühren einander mit Anlageflächen 406, 408, so daß der zwischen den Polstücken ausgebildete Spalt 400 schmale Randbereiche 412, 414 erhält, die sich gleichmäßig bis zur größten Spaltweite 414 erweitern. Die Polstücke 402, 404 sind mit einem Verbindungsstück 420 verbunden, das mit geeigneten Stiften 422, 424 befestigt ist. Der Luftspalt 400 hat bei dieser bevorzugten Ausführungsform eine Rautenform und ist an seinem Scheitelpunkt oder im Zentrum vergleichsweise weit und verengt sich in Richtung auf die beiden Kanten des Kerns. Diese rautenförmige Spaltform führt zu einem im wesentlichen geradlinigen, umgekehrt proportional verlaufenden Verhältnis zwischen Strom und Induktivität, welches optimal für das elektrische Lichtbogenschweißen ist. Der Luftspalt 400 kann mit einem Vergußmaterial mit geringer Permeabilität ausgefüllt sein, wenn die Drossel für die Anwendung des Schweißgerätes im Feld verpackt ist. Insoweit soll der Begriff "Luftspalt" im Sinne der Erfindung grundsätzlich nicht nur so verstanden werden, daß der Spalt zwischen den zwei Polstücken des Drosselkerns mit Luft gefüllt ist, sondern der Zwischenraum zwischen den Stirnflächen der Polstücke kann auch mit einem anderen Material geringer Permeabilität gefüllt sein.

## Patentansprüche

1. Ausgangsdrossel für eine Gleichstrom-Lichtbogenschweißeinrichtung mit einem Spulenkern mit hoher Permeabilität, der mindestens einen zwischen ersten und zweiten Polstücken ausgebildeten Spalt hat, der von ersten und zweiten Stirnflächen der Polstücke begrenzt wird, **wobei** die ersten und die zweiten Stirnflächen (54; 304; 324; 360; 364, 374; 56; 306; 326; 362; 366; 376) von an der Außenseite des Kerns (52) angrenzenden Kantenbereichen (54a,b, 56a,b; 310, 312; 330, 332) begrenzt sind, wobei sowohl die ersten Stirnflächen als auch die zweiten Stirnflächen in ihrem zwischen den Kantenbereichen liegenden Zwischenbereich V-förmig sind und jeweils einen Scheitelpunkt (54e, 56e) aufweisen, so daß die ersten Stirnflächen (54; 304; 324; 360; 364, 374) und die zweiten Stirnflächen (56; 306; 326; 362; 366; 376) zwischen sich einen Spalt (58; 314; 334; 338; 400) bilden, dessen Spaltweite sich über den Querschnitt des Kerns (52) von mindestens einem Maximalwert zu mindestens einem Minimalwert stufenlos verringert.

2. Ausgangsdrossel nach Anspruch 1, **dadurch gekennzeichnet, daß** der Spalt (58; 314; 334; 414) im Quer-schnitt längs des Kerns symmetrisch ist.

3. Ausgangsdrossel nach Anspruch 1 oder 2, **dadurch gekennzeichnet, daß** der Spalt (58; 414; 338) im Querschnitt längs des Kerns etwa rautenförmig ist.

4. Ausgangsdrossel nach einem der Ansprüche 1 bis 3, **dadurch gekennzeichnet, daß** die Zwischenbereiche außerhalb der Spaltlängsachse in größerer Nähe zu einem ersten als zu einem zweiten Kantenbereich liegen.

5. Ausgangsdrossel nach einem der Ansprüche 1 bis 4, **dadurch gekennzeichnet, daß** sich die ersten und zweiten Stirnflächen (410, 412) an ihren Kantenbereichen (406, 408) berühren.

6. Ausgangsdrossel nach einem der Ansprüche 1 bis 5, **dadurch gekennzeichnet, daß** der Spalt mit einem Material mit geringer Permeabilität gefüllt ist.

7. Ausgangsdrossel nach einem der Ansprüche 1 bis 6, **gekennzeichnet, durch** eine Wicklung für den Schweißstrom, wobei die Wicklung und der Kern so bemessen sind, daß eine Sättigung bei einem Schweißstrom von mindestens 100 Ampère vermieden wird.

## Claims

1. Output choke for a direct-current arc-welding device with an inductor core with high permeability which has at least one gap formed between first and second pole pieces and bounded by first and second end faces of the pole pieces, wherein the first and second end faces (54; 304; 324; 360; 364, 374; 56; 306; 326; 362; 366; 376) are bounded by edge regions (54a,b, 56a,b; 310, 312; 330, 332) adjoining the outside of the core (52), both the first end faces and the second end faces being V-shaped in their intermediate region between the edge regions and each having a vertex (54e, 56e) so that the first end faces (54; 304; 324; 360; 364, 374) and the second end faces (56; 306; 326; 362; 366; 376) form between them a gap (58; 314; 334; 338; 400) whose width steplessly decreases over the cross-section of the core (52) from at least one maximum value to at least one minimum value.

2. Output choke according to Claim 1, **characterized in that** the gap (58; 314; 334; 414) is symmetrical in cross-section along the core.

3. Output choke according to Claim 1 or Claim 2, **characterized in that** the gap (58; 414; 338) is approximately diamond-shaped in cross-section along the core.

4. Output choke according to any one of Claims 1 to 3, **characterized in that** the intermediate regions outside the longitudinal axis of the gap lie closer to a first edge region than to a second edge region.

5. Output choke according to any one of Claims 1 to 4, **characterized in that** the first and second end faces (410, 412) are in contact in their edge regions (406, 408).

6. Output choke according to any one of Claims 1 to 5, **characterized in that** the gap is filled with a material with low permeability.

7. Output choke according to any one of Claims 1 to 6, **characterized by** a winding for the welding current, the winding and core being dimensioned so that saturation is prevented with a welding current of at least 100 amperes.

## Revendications

1. Inductance de sortie pour un dispositif de soudage à l'arc à courant continu, comprenant un noyau de bobine à haute perméabilité, ce noyau présentant au moins un entrefer formé entre des premières et secondes pièces polaires et qui est délimité par des premières et secondes faces d'extrémité des pièces polaires, les premières et secondes faces d'extrémité (54 ; 304 ; 324 ; 360 ; 364, 374 ; 56 ; 306 ; 326 ; 362 ; 366 ; 376) étant délimitées par des zones de bord (54a,b, 56a,b ; 310, 312 ; 330, 332) adjacentes à l'extérieur du noyau (52), les premières faces d'extrémité ainsi que les secondes faces d'extrémité étant en forme de V dans leur zone intermédiaire s'étendant entre les zones de bord, et présentant chacune un sommet (54e, 56e), de sorte que les premières faces d'extrémité (54 ; 304 ; 324 ; 360 ; 364, 374) et les secondes faces d'extrémité (56 ; 306 ; 326 ; 362 ; 366 ; 376) constituent entre elles un entrefer (58 ; 314 ; 334 ; 338 ; 400) dont l'écartement diminue de façon continue d'au moins une valeur maximale à au moins une valeur minimale sur la section transversale du noyau.

2. Inductance de sortie selon la revendication 1, **caractérisée en ce que** l'entrefer (58 ; 314 ; 334 ; 414) est symétrique en section transversale le long du noyau.

3. Inductance de sortie selon la revendication 1 ou 2, **caractérisée en ce que** l'entrefer (58 ; 414 ; 338) est sensiblement en losange en section transversale le long du noyau.

4. Inductance de sortie selon l'une des revendications 1 à 3, **caractérisée en ce que** les zones intermédiaires s'étendent en dehors de l'axe longitudinal de l'entrefer, plus près d'une première zone de bord que d'une seconde zone de bord.

5. Inductance de sortie selon l'une des revendications 1 à 4, **caractérisée en ce que** les premières et secondes faces d'extrémité (410, 412) se touchent en leurs zones de bord (406, 408).

6. Inductance de sortie selon l'une des revendications 5, **caractérisée en ce que** l'entrefer est rempli d'un matériau à faible perméabilité.

7. Inductance de sortie selon l'une des revendications 1 6, **caractérisée par** un enroulement pour le courant de soudage, l'enroulement et le noyau étant dimensionnés de façon à éviter une saturation pour un courant de soudage d'au moins 100 Ampères.
